Europäisches Patentamt

(19) European Patent Office

Office européen des brevets

(11) Publication number: **0 326 525 B1**

# EUROPEAN PATENT SPECIFICATION

(12)

(45) Date of publication of patent specification :
**30.12.92 Bulletin 92/53**

(51) Int. Cl.⁵ : **A23L 3/44,** A23K 1/00

(21) Application number : **89830019.9**

(22) Date of filing : **20.01.89**

(54) **A process for the production of dehydrated compressed food products.**

(30) Priority : **27.01.88 IT 4757388**

(43) Date of publication of application :
**02.08.89 Bulletin 89/31**

(45) Publication of the grant of the patent :
**30.12.92 Bulletin 92/53**

(84) Designated Contracting States :
**AT BE CH DE ES FR GB GR LI LU NL SE**

(56) References cited :
**DE-A- 2 130 216**
**DE-A- 2 233 467**
**DE-A- 2 504 392**
**DE-A- 3 637 472**
**DE-C- 188 996**
**US-D- 48 560**

(73) Proprietor : **AGROFIL SOC. COOP. A R.L.**
**Viale Artale Alagona 37**
**I-95126 Catania (IT)**

(72) Inventor : **Costanzo, Luigi**
**c/o AGROFIL Soc. Coop. a r.l.**
**Via Artale Aragona 37 I-95126 Catania (IT)**

(74) Representative : **de Simone, Domenico et al**
**Ing. Barzanò & Zanardo Roma S.p.A. Via**
**Piemonte 26**
**I-00187 Roma (IT)**

Jouve, 18, rue Saint-Denis, 75001 PARIS

EP 0 326 525 B1

# Description

This invention relates to a process for the production of dehydrated compressed food products.

More particularly, this invention relates to a process of the type mentioned above that allows food products to be obtained characterized by long conservation, which can be consumed as such or after reconstitution.

The employment of lyophilized (freeze-dried) products has remarkably spread in recent gears. As a consequence, researches have been developed which, exploiting the advantages of freeze-drying or lyophilization, have brought about the obtainment of increasingly convenient products for use and having their organoleptic characteristics unaltered at an ever increasing extent.

In DE-C-188,996, DE-A-2,233,467 and DE-A-2,130,216, processes to obtain preservable products are described.

The process suggested by the Applicant belongs in that context, as the Applicant's studies were particularly concerned with the realization of a production process allowing a dehydrated compressed food product to be obtained, i.e., a product of reduced weight and volume, suitable to be consumed as such or as a reconstituted product after reconstitution in water, whose organoleptic properties keep practically unaltered with respect to the fresh product.

Such objects are obtained, according to the technical teaching of the present patent application, starting from dehydrated food products from animal or vegetable sources, structured or unstructured, as single products or as mixtures with other products, which are first subjected to a physicochemical treatment (moistening), which treatment gives them plasticity, and then subjected to a very strong compression by means of power-consuming machines and next to a further physicochemical treatment (drying).

The final products having the characteristics supplied by the employment of the process according to the present invention show a remarkable set of practical as well as commercial advantages.

Indeed, they are characterized by a reduced weight and by a small volume, and a extremely suitable both for stockage and for sale, as well as for transportation by sellers or by consumers.

Moreover, products that can be consumed directly are characterized by a very high nutritional density and can be transported very easily.

As regards products to be reconstituted, such products in addition to the advantages mentioned above also allow eatable products to be obtained in a short time by merely adding a liquid to them, and possibly by heating them, the reconstituted products so obtained having odor, taste and nutritional qualities similar to those of the fresh products.

Accordingly, it is a specific object of the present invention a process for the production of dehydrated compressed food products, said process comprising the following steps, starting from basic food products which can be freeze-dried (lyophilized), or dried, and consisting of a single product or a mixture of products:

a) moistening the freeze-dried food product or mixture of products, up to an absolute moisture amount of about 20 % depending on the kind of food product;

b) compressing the moistened product by means of power-consuming machines at pressures between 0.196 and 9.8 MPa;

c) drying the compressed product down to absolute moisture amounts less than or equal to 3 %.

According to the present invention, the moistening step a) can be carried out through spraying water and then allowing the food product to reach equilibrium again with the environment at a temperature between 25 and 80°C, under controlled humidity conditions.

As an alternative, the moistening of the product can also be obtained by treatment with humid air in a controlled temperature chamber (25-80°C) or through treatment with flowing steam at controlled temperature (25-80°C).

The compression is performed preferably working at pressures between 0.98 and 1.96 MPa.

Further according to the present invention such process can be performed starting from a partially freeze-dried product having moisture amounts between 4 and 25 % (according to the kind of product) and instead of proceeding according to the step a), it is possible to carry out the following step

a1) consisting in taking to the equilibrium value the residual moisture amount of the partially freeze-dried product.

Such step a1) can be realized by keeping the product within a controlled humidity environment.

The process according to the present invention will be disclosed in the following just for illustrative purposes, with particular reference to some specific examples.

EXAMPLE I

The preparation of freeze-dried parsley compressed into spherical shape

Pure freeze-dried parsley (100 % parsley) is taken, having a moisture amount between 1 and 5 %. The percentage of stems with respect to leaves is not to be higher than 10 % in order to avoid drawbacks in the compression step.

The freeze-dried parsley product is subjected to a partial remoistening process by contacting the same with humid air inside a conditioning chamber in which the temperature is kept at 50°C and the relative humidity is of 90 %.

The freeze-dried product arranged in the form of a layer of about 10 mm thickness is kept inside the chamber for 30 minutes so as to obtain a weight increase of about 20 %.

Remoistening is necessary for supplying the lyophilized product with a certain plasticity which allows the same to be compressed.

Compression is obtained inside a steel chamber of 4.2 mm diameter in which a cylinder of hemispherical shape with radius of 14.0 mm slides driven by an oleodynamic unit of about 610 N maximum thrust.

Parsley is compressed by the upper piston against a fixed steel ledge having a hemispherical shape of 14.0 mm radius which is screwed through a normal screw thread into the jacket; the extraction of the compressed product occurs by separating two such parts.

1.1 g portions of lyophilized, remoistened parsley are introduced into the jacket at the temperature of 35-40 °C; the level of the product under such conditions is of 240 mm. The estimated pressure for compressing the product ranges from 0.196 and 0.98 MPa.

The product is kept loaded for 20 seconds, starting from the moment when the borders of the two shaped surfaces come in contact. During the compression process weight changes are observed. After compression, the freeze-dried product is brought again to its original moisture amount by keeping the tiny balls for 6 hours in an oven at a controlled temperature of 50°C and a pressure lower than 1.33 kPa (10 mm Hg), in order to ensure a sufficient time-lasting stability of the physicochemical and organoleptic characteristics.

Redrying causes a 3.8 % weight reduction.

The apparent specific weight of the freeze-dried, not remoistened product is 0.029 g/cm$^3$.

The apparent specific weight of the freeze-dried product, compressed and redried is 1.005 g/cm$^3$.

Parsley so obtained can be employed as an ingredient for recipes of various kinds by merely adding the tiny ball of the parsley product into the cooking pot and by cooking the same together with the other ingredients, or in order to obtain parsley having organoleptic characteristics comparable to those of the equivalent fresh product. In that case, it will be sufficient to add two spoonfuls of water for each ball and to heat the whole for about 5 minutes.

A tiny ball gives when reconstituted about 6.5 g of parsley, i.e. an amount sufficient for a portion.

EXAMPLE II

The preparation of a freeze-dried (lyophilized) onion product compressed into a spherical shape

A freeze-dried onion product is employed (100 % onion) obtained from a variety having white inner tunics.

The fresh raw material is cut into small plates of 8 mm x 8 mm sizes, the third size being determined by the nature and the morphological characteristics of onion.

The lyophilized onion product has a moisture amount between 1 % and 3.5 %, and it is separated from the powder onion product possibly produced as a result of previous operations, before proceeding to the preparation of the compressed product, by sifting the same on a 10 mesh screen.

Some plasticity is given to the freeze-dried product as its moisture amount is higher than 3%, in order to make it suitable for compression, by keeping the same inside a sealed container at a controlled temperature of 35°C.

The holding time within the low-density polyethylene container of 100 ml volume for 1.4 g of freeze-dried product is of about 15 minutes.

Plastification in the case of the freeze-dried onion product having moisture amount less than 3 % is obtained by contacting the product with humid air inside a conditioning chamber at a temperature of 5°C and relative humidity of 90 %.

The freeze-dried product arranged in the form of a 15 mm thick layer is kept within the chamber for 8 minutes, so that a 4.3 % weight increase of the freeze-dried onion product is obtained.

The compression of the freeze-dried onion product is carried out inside a steel chamber of 17.2 mm diameter in which a cylinder with a hemispherical chamber of 17 mm radius slides driven by an oleodynamic unit having about 610 N maximum thrust.

Onion is compressed by the upper piston against a fixed steel ledge having a hemispherical shape of 17 mm radius which is screwed through a normal screw thread into the jacket; the extraction of the compressed product occurs by separating two such parts.

In order to obtain compression, aliquot parts of the lyophilized onion product are introduced into the jacket, such parts being of:

1.40 g if the product has not been remoistened;

1.46 g if the product has been remoistened.

In both cases, the temperature of the product must be of 30-35°C. The compression pressure ranges from 0.196 and 0.98 MPa.

The product is kept under load for 20 seconds starting from the moment when the borders of the two shaped surfaces come in contact.

During the compression process, no weight changes are observed.

If the starting freeze-dried product has been remoistened, the compressed product is brought again to the original moisture amounts by keeping the ting balls for 5 hours witthin an oven at a controlled temperature of 50°C and at a pressure less than 1.33 KPa (10 mm Hg), in order to ensure a sufficient time-lasting stability of the physicochemical and the organoleptic characteristics.

Redrying causes a weight reduction of about 4.1%.

The apparent specific weight of the freeze-dried, non-remoistened product is 0.073 g/cm$^3$.

The apparent specific weight of the freeze-dried product, compressed and redried is 0.641 g/cm$^3$.

The compressed freeze-dried onion product so obtained can be employed as an ingredient for preparing recipes of various kinds, by merely adding onion to the cooking pot in which a minimum amount of water is to be present, together with the other ingredients, or in order to obtain minced onion having organoleptic characteristics similar to those of the fresh product. In that case it is sufficient to add 3-4 spoonfuls of water for each tiny sphere and to warm for about 5 minutes.

8.2 g of a reconstituted onion product is obtained from each tiny sphere.

EXAMPLE III

The preparation of a freeze-dried tomato product compressed into a spherical shape

A double concentrated tomato product and a minced tomato product are mixed in the respective percentages of 52.17 % and 47.83 %, the mixture being then freeze-dried.

The freeze-dried product has a moisture amount in the range from 1 to 3 % and is in the shape of granules of 2.5-3.5 mm sizes.

The lyophilized product of granules of lower sizes as well as the powder product are removed through sifting on a 10 mesh screen.

The screened product is then remoistened by contacting the same with humid air inside a conditioning chamber at a temperature of 40°C and relative humidity of 90 %.

The freeze-dried product, arranged in the form of a 15 mm thick lager is kept inside the conditioning chamber for 10 minutes. During the treatment the product is stirred 2-3 times.

A weight increase of the freeze-dried product of 2.8 % is obtained under such conditions.

The compression of the remoistened tomato product is carried out inside a steel jacket of 20.2 mm diameter in which a cylinder having a hemispherical shape of 20 mm radius slides driven by an oleodynamic unit having about 610 N maximum thrust.

The product is compressed by the upper piston against a fixed steel ledge having a hemispherical shape of 20 mm radius screwed through a normal screw thread into the jacket; the extraction of the compressed product occurs by separating two such parts.

Aliquot parts of 3.30 g of the freeze-dried and remoistened tomato product, kept at the controlled temperature of 30-35°C, are introduced into the jacket and then compressed by lowering the cylinder till the borders of the two shaped surfaces come in contact. The compression pressure ranges between 0.196 and 0.98 MPa.

The product is kept under load for 10-15 seconds staring from the moment when the borders of the two shpaed surfaces come in contact.

During the compression process, no weight changes are observed.

After compression, the freeze-dried product is brought again to moisture amounts capable od ensuring a sufficient time-lasting stability of the physicochemical and organoleptic characteristics, by keeping the tiny spheres for 5 hours in an oven at a controlled temperature of 50°C and at a pressure less than 1.33 KPa (10 mm H).

Redrying causes a weight reduction of 2.1 %.

The apparent specific weight of the freeze-dried, non-remoistened product is 0.139 g/cm$^3$.

The apparent specific weight of the freeze-dried product, compressed and redried is 0.788 g/cm$^3$.

The compressed freeze-dried tomato product so obtained can be employed, instead of tomato mash or tomato concentrated products for any recipes, by merely adding the tiny ball of the tomato product to the cooking pot in which but a minimum amount of water is present and by cooking it together with the other ingredients, or to prepare tomato sauces. In that case, the ting balls of the tomato product will be put in hot water (3-6 spoonfuls for each ball according to the desired concentration) and the whole will be stirred for some minutes.

Claims

1. A process for the production of dehydrated compressed food products characterized in that it comprises the steps, starting from base freeze-dried or dried food products, as individual products or as mixtures of products, of:
   a) moistening the freeze-dried or dried food product, as a single product or as a mixture of products, up to absolute moisture amounts of about 20 % depending on the type of the food product;
   b) compressing the moistened product by means of power-consuming machines at pressures ranging from to 0.196 and 9.8 MPa;
   c) drying the compressed product down to absolute moisture amounts of 3 %.

2. A process according to claim 1, characterized in that said step a) is performed by spraying water and allowing the food to come to equilibrium at ambient temperature between 25 and 80°C under controlled conditions of humidity.

3. A process according to claim 1, characterized in that said step a) is carried out by treatment with humid air in a chamber at a controlled temperature (25-80°C).

4. A process according to claim 1, characterized in that said step a) is carried out by treatment with flowing steam at a controlled temperature (25-80°C).

5. A process according to claim 1, characterized in that sadi compression according to step b) is carried out at a pressure between 0.98 and 1.96 MPa.

6. A process according to claim 1, characterized in that it starts with partially freeze-dried products having moisture amounts ranging from 4 to 25 %, and also characterized in that it comprises, instead of step a), the step of
a1) bringing again to the equilibrium value the residual moisture amount of the partially freeze-dried product,
whereas the other steps b) and c) keep unchanged.

7. A process according to claim 6, characterized in that said step a1) is carried out by holding the product within a controlled humidity chamber.

## Patentansprüche

1. Verfahren zur Herstellung von dehydrierten gepressten Nahrungsmittelprodukten, dadurch gekennzeichnet, dass es, ausgehend von getrockenen oder kuehl- getrockenen Grund- Nahrungsmittelprodukten, als einzelne Produkte oder als ein Gemisch derselben, folgende Verfahrenschritte enthaelt:
a) Benaessung der kuehl- getrockenen oder getrockenen Produkte, als ein einzelnes Produkt oder als ein Gemisch von Produkten, bis zum absoluten Naesse-Gehalt von etwa 20%, in Abhaengigkeit von der Sorte des Nahrungsmittels;
b) Zusammenpressen des nassen Produkts durch Kraftaufwand-Maschinen bei einem Druck von 0,198 bis 9,8 MPa;
c) Trocknen des zusammengepressten Produktes bis zum absoluten Feuchtigkeit-Gehalt von 3%.

2. Verfahren nach Anspruch 1, dadurch gekennzeichnet, dass der vorgenannte Verfahrensschritt a) durch Aufspritzen von Wasser durchgefuehrt wird, wobei das Nahrungsmittelprodukt bis zur Trimmlage bei Raumtemperatur zwischen 25 und 80°C unter kontrollierten Feuchtigkeitsverhaeltnissen stehen gelassen wird.

3. Verfahren nach Anspruch 1, dadurch gekennzeichnet, dass der vorgenannte Verfahrenschritt a) durch Behandlung mit Nassluft in einem Raum mit einer kontrollierten Temperatur (25-80°C) durchgefuehrt wird.

4. Verfahren nach Anspruch 1, dadurch gekennzeichnet, dass der vorgenannte Verfahrensschritt a) durch Behandlung mit einem Wasserdampstrom bei einer kontrollierten Temperatur (24-80°C) durchgefuehrt wird.

5. Verfahren nach Anspruch 1, dadurch gekennzeichnet, dass das vorgenannte Zusammenpressen gemaess dem Verfahrensschritt b) bei einem Druck zwischen 0,98 und 1,96 MPa durchgefuehrt wird.

6. Verfahren nach Anspruch 1, dadurch gekennzeichnet, dass es von teilweise kuehl- getrocken Produkten mit einem Feuchtigkeitsgehalt von 4 bis 25% ausgeht und auch dadurch, dass es anstelle des Verfahrensschrittes a), den folgende Verfahrensschritt enthaelt:
a1) das restliche Feuchtigkeitsgehalt des teilweise kuehl- getrockenen Produkts nochmals zum Trimmwert gebracht wird,
waehrend die anderen Verfahrensschritte b) und c) unveraendert gelassen werden.

7. Verfahren nach Anspruch 6, dadurch gekennzeichnet, dass der vorgenannte Verfahrensschritt a1) durch Einbringen des Produkts in einen Raum mit kontrollierter Temperatur durchgefuehrt wird.

## Revendications

1. Procédé pour la production de produits alimentaires deshydratés comprimés, caractérisé en ce que qu'il comprend, a partir de produits de base, desséchés ou desséchés à froid, comme produits individueles ou comme melanges de produits, les phases suivantes:
a) humidification de produits desséchés ou desséchés à froid jusqu'à quantités de humidité absolute d'environ 20% selon le type de produit alimentaire;
b) compression du produit humidifié au moyen de machines à dèpense d'energie à la pression compris entre 0,196 et 9,8 MPa;
c) dessiccation du produit comprimé jusq'à quantité de humidité absolute de 3%.

2. Procédé selon la revendication 1, caractérisé en ce que ladite phase a) est réalisée en aspergent de l'eau et en laissant le produit à parvenir à l'equilibre à température ambiente entre 25 at 80°C sous conditions de humidité controllées.

3.  Procédé selon la revendication 1, caractérisé en ce que ladite phase a) est réalisée par traitement avec de l'air humide dans une chambre à température controllée (25-80°C).

4.  Procédé selon la revendication 1, caractérisé en ce que ladite phase a) est réalisé par traitement avec le courant de vapeur d'eau à température controllée (25-80°C).

5.  Procédé selon la revendication 1, caractérisé en ce que ladite compression selon la phase b) est réalisée à la pression entre 0,98 et 1,86 MPa.

6.  Procédé selon la revendication 1, caractérisé en ce qu'il part de produits partiellement desséchés à froid, ayant une quantité de humidité entre 4 et 25% et caractérisé aussi en ce qu'il comprend au lieu de la phase a), le phase:
    a1) porter de nouveau au valeur d'equilibre la quantitè de humidité residuelle du produit partiellement desséchés à froid, tandis que les autres phases b) et c) ne sont pas modifiées.

7.  Procédé selon la revendication 6, caractérisé en ce que ladite phase al) est réalisée en tenant le produit dans une chambre à humiditè controllée.